# EUROPEAN PATENT APPLICATION

(11) **EP 4 002 660 A1**
(43) Date of publication of application: **25.05.2022**
(21) Application number: 20844881.1
(22) Date of filing: 12.02.2020
(51) Int. Cl.: H02M 1/00, H02M 7/48

(54) **CURRENT MEASUREMENT UNIT AND POWER CONVERSION DEVICE**

(30) Priority: 19.07.2019 JP 2019133945
(71) Applicant: Hitachi, Ltd., Tokyo 100-8280 (JP)
(72) Inventor: UCHIDA Takayuki, Tokyo 100-8280 (JP); TANI Kazuki, Tokyo 100-8280 (JP); WADA Shinichirou, Tokyo 100-8280 (JP); YANO Tomohiko, Tokyo 100-8280 (JP)
(74) Representative: Mewburn Ellis LLP
(86) International application number: PCT/JP2020/005351
(87) International publication number: WO 2021/014666

(57) **Abstract**

Provided is a current measurement unit capable of measuring a load current without providing a current sensor between an inverter and a load or inside the inverter and capable of being reduced in size, and also provided is a power conversion device using the current measurement unit. The current measurement unit measures a load current supplied from a power conversion device to a load and is characterized by being provided with: a power module for controlling the energization of the power conversion device; a control unit for controlling the power module; a turn-off time measurement unit for measuring the turn-off time of the power module; an information measurement unit for measuring at least either temperature information of the power module or a DC power supply voltage input to the power module and outputting the measurement result; and a current calculation unit for calculating the load current on the basis of the output of the turn-off time measurement unit and the output of the information measurement unit.

## Description

### Technical Field

The present invention relates to the configuration of a current measurement unit, and particularly to a technology effective when applied to a power conversion device for automobiles and railways, which requires miniaturization and low power loss.

### Background Art

In a motor drive system equipped with a motor being a rotary electric machine for railways or electric vehicles or the like, it has been known that an inverter which is a power conversion device and a motor control unit are provided between a DC power supply and the motor, and a load current being a drive signal is sent to the motor by the inverter to drive the motor. The inverter converts DC power output from the DC power supply into an AC signal determined according to a torque command value, and sends the load current to the motor.

An inverter control unit sends a control signal for generating a load current to the inverter to control the inverter. The control signal is determined based on the AC signal determined based on the torque command value and an AC signal generated based on current motor position information and a load current value.

Thus, it is important to measure the load current in the control of the motor drive system. It is also necessary to measure a DC power supply voltage of the inverter for the purpose of calculation of the modulation rate of PWM (pulse width modulation) of the inverter.

As a measurement technology related to an inverter, for example, there is known such technology as described in Patent Literature 1. There has been disclosed in Patent Literature 1 "a technology for measuring the temperature of a power module in order to monitor whether the junction temperature of the power module inside an inverter is working so as not to exceed a safe operating region".

On the other hand, the miniaturization of the power conversion device has been required to improve the degree of freedom in designing the motor drive system. As a method of miniaturizing the power conversion device, there is known a technology of omitting a current sensor that measures the load current between the inverter and the motor. The load current is measured by installing a load current sensor inside the inverter. For example, there has been disclosed in Patent Literature 2, "a technology of measuring a load current by a shunt resistor installed in a power supply line".

### Citation List

### Patent Literature

Patent Literature 1: Japanese Patent Application Laid-Open No.2017-184298
Patent Literature 2: International Publication No. WO2010/103565A1

### Summary of Invention

### Technical Problem

As described above, it is necessary to measure the load current and the DC power supply voltage in controlling the inverter. However, in the configuration of the above-mentioned Patent Literature 1, it is necessary to provide a temperature sensor and a current sensor inside the power conversion device. It is disadvantageous for miniaturization of the device.

Further, the load current measuring method provided with the shunt resistor such as shown in Patent Literature 2 is accompanied by a problem that a space for installing the shunt resistor is required, and also the energy saving property of the inverter is impaired because a power loss due to the shunt resistor occurs.

Therefore, an object of the present invention is to provide a current measurement unit capable of measuring a load current without providing a current sensor between an inverter and a load or inside the inverter, and capable of miniaturization, and a power conversion device using the current measurement unit.

### Solution to Problem

In order to solve the above problems, the present invention provides a current measurement unit which measures a load current supplied from a power conversion device to a load, and includes a power module which controls energization of the power conversion device, a control unit which controls the power module, a turn-off time measuring unit which measures a turn-off time of the power module, an information measurement unit which measures at least either of temperature information of the power module and a DC power supply voltage input to the power module and outputs a result of the measurement, and a current calculation unit which calculates the load current, based on the output of the turn-off time measuring unit and the output of the information measurement unit.

Further, the present invention provides a power conversion device having the above-mentioned current measurement unit, and the load is a motor driven by the power conversion device.

### Advantageous Effects of Invention

According to the present invention, there can be provided a current measurement unit capable of measuring a load current without providing a current sensor between the inverter and a load or inside the inverter, and capable of miniaturization, and a power conversion device using the current measurement unit.

Thus, it is possible to realize a motor drive system which combines miniaturization and energy saving.

Problems, configurations and effects other than those described above will be clarified by the following description of embodiments.

### Brief Description of Drawings

Fig. 1 is a block diagram showing a schematic configuration of a power conversion device according to a first embodiment of the present invention.
Fig. 2 is a block diagram showing the details of an inverter 14 in Fig. 1.
Fig. 3 is a diagram showing a current value calculation map stored in a current calculation unit 50 of Fig. 1.
Fig. 4(a) is a diagram showing the element characteristics of an IGBT during a turn-off period.
Fig. 4(b) is a diagram showing the element characteristics of the IGBT during the turn-off period.
Fig. 4(c) is a diagram showing the element characteristics of the IGBT during the turn-off period.
Fig. 5(a) is a diagram showing a turn-off time of the IGBT used for obtaining the map of Fig. 3.
Fig. 5(b) is a diagram showing a turn-off time of the IGBT used for obtaining the map of Fig. 3.
Fig. 6 is a diagram showing the relationship between a turn-off time of a gate current at the time of turn-off of the IGBT used for obtaining the map of Fig. 3 and a conduction current value of the IGBT.
Fig. 7 is a diagram showing the relationship between a turn-off time of a gate current at the time of turn-off when the temperature of the IGBT used for obtaining the map of Fig. 3 changes, and a conduction current value of the IGBT.
Fig. 8 is a diagram showing the relationship between a turn-off time of a gate current at the time of turn-off of the IGBT when a power supply voltage value of an inverter used for obtaining the map of Fig. 3 changes, and a conduction current value of the IGBT.
Fig. 9 is a diagram showing an example of a phase current calculated by the first embodiment.
Fig. 10 is a flowchart showing a current measurement method by the power conversion device according to the first embodiment.
Fig. 11 is a block diagram showing a schematic configuration of a power conversion device according to a second embodiment of the present invention.
Fig. 12 is a diagram showing a map stored in a current calculation unit 50 of Fig. 11.
Fig. 13 is a diagram showing the element characteristics about a voltage value and a conduction current when the temperature of the IGBT changes.
Fig. 14 is a flowchart showing a current and temperature measurement method by the power conversion device according to the second embodiment.
Fig. 15 is a block diagram showing a schematic configuration of a power conversion device according to a third embodiment of the present invention.
Fig. 16 is a flowchart showing a current measurement method by the power conversion device according to the third embodiment.
Fig. 17 is a diagram showing an element variation correction method between IGBTs by a power conversion device according to a fourth embodiment.
Fig. 18 is a flowchart showing a current measurement method by the power conversion device according to the fourth embodiment.

### Description of Embodiments

Hereinafter, embodiments of the present invention will be described using the drawings. Incidentally, in each drawing, the same components are designated by the same reference numerals, and the detailed description of dual parts will be omitted.

A power conversion device according to the present embodiment is used by being mounted on, for example, an electric vehicle such as for a railway, a hybrid vehicle, or an electric car. Incidentally, in the following, description will be made as to the case where a rotary electric machine driven by a power converter is a three-phase AC motor for railways, but a rotary electric machine such as a motor other than for railways can also be used.

Further, although the rotary electric machine is a motor having the function of only the motor, it can be a motor generator having both the functions of a motor and a generator, or one having the function of only a generator. In addition, the number of phases of the rotary electric machine may be other than three. Moreover, the control of the rotary electric machine will be described assuming that the drive current of the rotary electric machine is fed back to a current value command value.

### [First Embodiment]

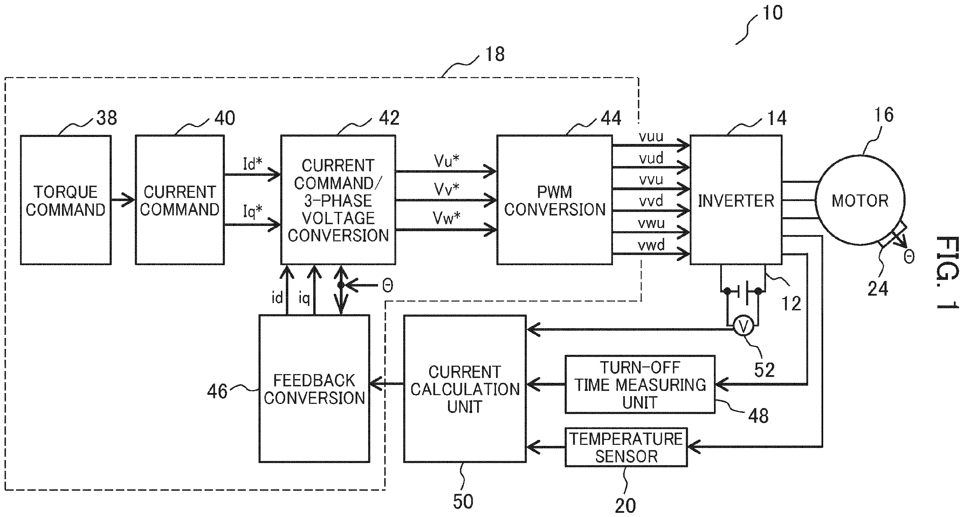

A current measurement unit, a current measurement method, and a power conversion device according to a first embodiment of the present invention will be described with reference to Figs. 1 to 10. Fig. 1 is a block diagram showing the power conversion device according to the present embodiment. This device is intended to drive a three-phase induction motor.

Fig. 1 shows a motor 16 which is a rotary electric machine to be driven by a power converter, an inverter 14 which is a power converter, and a motor control unit 18 which controls the inverter 14.

As shown in Fig. 1, the power conversion device 10 includes a DC power supply device 12 which supplies DC power, a voltage sensor (DC power supply voltage value measuring unit) 52 which measures a voltage value of the DC power supply device 12, an inverter 14 which converts the DC power from the DC power supply device 12 into AC power, a three-phase AC type motor 16 for railways driven by using an AC current (U-phase current ium, V-phase current ivm, W-phase current iwm) generated by the inverter 14, a motor control unit 18 which sends a control signal for driving the motor 16 to the inverter 14, i.e., controls the inverter 14, a temperature sensor 20, a motor position sensor (rotation angle sensor) 24, a turn-off time measuring unit 48, which is a turn-off delay time calculating unit for calculating a turn-off delay time of a power module (IGBT) mounted in the inverter 14, and a current calculation unit 50 which calculates a current value, based on the results of at least either one of the temperature sensor 20 and the voltage sensor 52, and the turn-off time measuring unit 48.

Incidentally, the temperature sensor 20 is, for example, a temperature sensor provided in a module, but it can also be a method or sensor for estimating the temperature of modules other than that. Further, the motor 16 is, for example, a synchronous motor provided with a permanent magnet, but motors other than that can also be used.

The motor control unit 18 includes a microcomputer having a CPU, a memory, and the like. The motor control unit 18 has a torque command calculation part 38, a current command calculation part 40, a current command/three-phase voltage conversion part 42, a PWM conversion part 44, and a feedback conversion part 46.

The feedback conversion part 46 converts the motor drive currents ium, ivm, and iwm calculated by the current calculation unit 50 into a d-axis current id and a q-axis current iq by three-phase/two-phase conversion using a rotation angle θ of the motor 16, and inputs the same to the current command/three-phase voltage conversion part 42. The current command calculation part 40 calculates a d-axis current command value id* and a q-axis current command value iq* being current command values based on an output torque command value input from the torque command calculation part 38 in accordance with a table or the like created in advance, and outputs the same to the current command/3-phase voltage conversion part 42.

The current command/three-phase voltage conversion part 42 generates voltage command values for the d-axis and q-axis from the d-axis current command value id* and the q-axis current command value iq*, and the d-axis current id and the q-axis current iq input from the feedback conversion part 46, and then converts them into three-phase AC voltage command values Vu*, Vv*, and Vw* using the rotation angle θ of the motor 16 and inputs the same to the PWM conversion part 44.

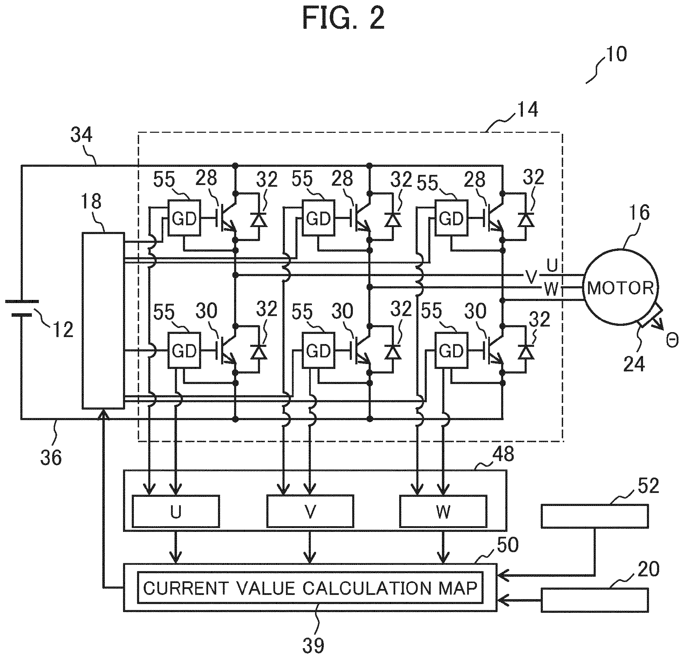

The PWM conversion part 44 generates PWM control signals vuu, vud, vvu, vvd, vwu, and vwd to control turn ON/OFF of respective IGBTs 28 and 30 (to be described later in Fig. 2) constituting the inverter 14, based on the input three-phase AC voltage command values Vu*, Vv*, and Vw* and the DC power supply voltage, and inputs them to the inverter 14. Consequently, the inverter 14 outputs a drive signal to the motor 16 to drive the motor 16.

Fig. 2 is a block diagram showing in detail the configuration of the inverter 14 shown in Fig. 1. As shown in Fig. 2, the inverter 14 is connected between the positive electrode side and the negative electrode side of the DC power supply device 12, converts input power from DC power to AC power, and outputs the power therefrom. To this end, the inverter 14 includes a plurality of IGBTs 28 and 30 which are a plurality of switching elements, and reflux diodes 32 each connected corresponding to each of the IGBTs 28 and 30. A gate voltage of each of the IGBTs 28 and 30 is controlled by a gate driver 55.

The plurality of IGBTs 28 and 30 are connected to the windings of the three phases (U phase, V phase, W phase) of the motor 16, respectively. That is, three inverter arms consisting of series connections of two respective IGBTs 28 and 30 are received between the positive electrode side line 34 extending from the positive electrode of the DC power supply device 12 and the negative electrode side line 36 extending from the negative electrode side thereof. The midpoints of the two respective IGBTs 28 and 30 are connected to three-phase coils of the motor 16, respectively.

Of the plurality of IGBTs 28 and 30, in each inverter arm, the IGBT 28 provided on the positive electrode side is referred to as the upper IGBT 28, and the IGBT 30 provided on the lower arm on the negative electrode side is referred to as the lower IGBT 30. In each arm, the upper IGBT 28 and the lower IGBT 30 are connected in series with each other. Then, the ON/OFF of the IGBTs 28 and 30 is controlled to supply AC power to the motor 16.

For example, a smoothing capacitor and a boost converter both not shown are connected between the motor 16 and the DC power supply device 12. Incidentally, the switching elements constituting the inverter 14 are not limited to the IGBTs 28 and 30, and various switching elements such as transistors and MOSFETs can be adopted.

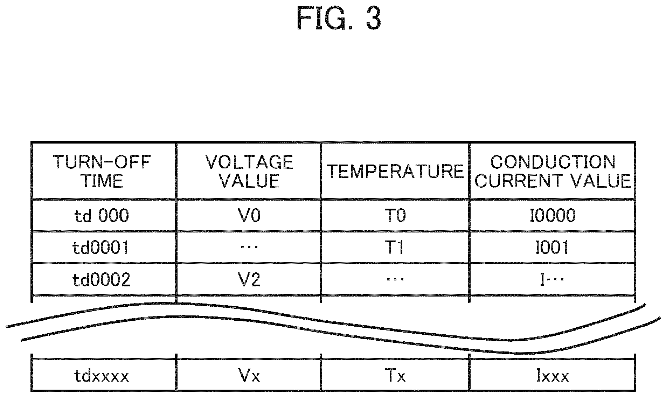

Fig. 3 is a diagram showing an example of a current value calculation map 39 stored in the current calculation unit 50 of Figs. 1 and 2. The map of Fig. 3 may include at least one piece of information about either the power supply voltage value or the temperature. The map shows the relationship among at least either one of the temperature of each of the IGBTs 28 and 30 being the switching elements and the voltage value of the DC power supply of the inverter 14, a turn-off time of each of the IGBTs 28 and 30 being the switching elements, and an on-driving passing current value (conduction current value) of each of the IGBTs 28 and 30 being the switching elements.

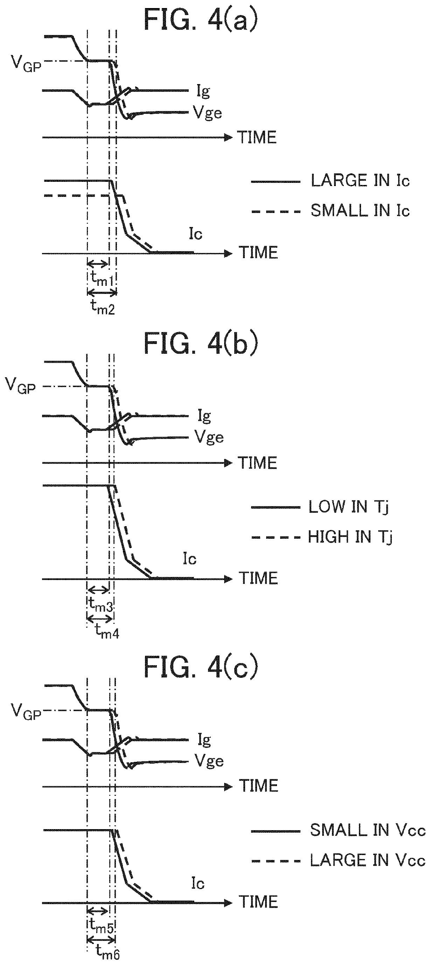

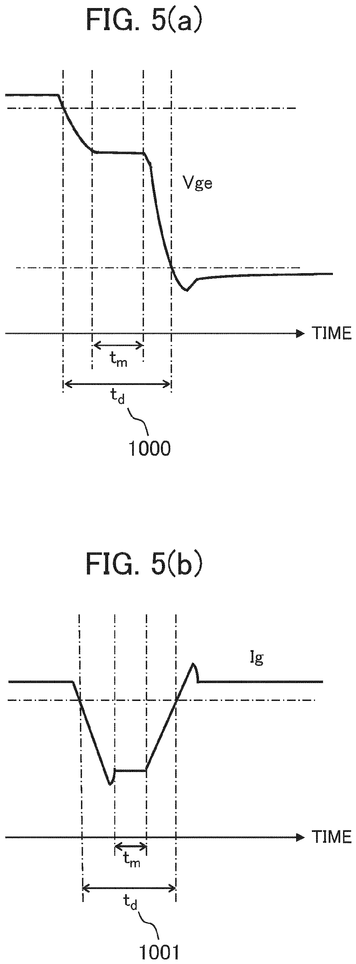

The turn-off time for obtaining the map of Fig. 3 will be described using Figs. 4(a) to 4(c) and Figs. 5(a) and 5(b).

Fig. 4(a) is a diagram showing an example of a time change in the element characteristic of the IGBT at the time of turn-off. Vge is a voltage between the gate and emitter of the IGBT, Ig is a gate current of the IGBT, and Ic is a current between the collector and emitter of the IGBT. Switching of semiconductor elements including IGBTs performs turn-on/turn-off by charging/discharging a gate capacitance. At this time, Cgc which is the capacitance between the gate and collector changes due to the fluctuation of Vge, and a period during which Vge becomes flat occurs to charge and discharge Cgc. This period is called a "mirror period".

VGP is Vge that becomes flat during the mirror period. Let this period be tm. When the steady-state current value Ic drops from a solid line Ic to a chain line Ic, Vge changes from a solid line Vge to a chain line Vge, and Ig changes from a solid line Ig to a chain line Ig, respectively. At this time, the tm period increases from tm1 to tm2.

Fig. 4(b) is a diagram showing an example of a time change in the element characteristic when the temperature of the IGBT at the time of turn-off changes. Tj represents a junction temperature inside the power module. Temperature information does not have to be Tj, but may be one which reflects the temperature information related to the IGBT as in the case temperature of the power module. As Tj increases, the characteristics of Ic, Vge, and Ig change from a solid line to a chain line. At this time, the tm period increases from tm3 to tm4.

Fig. 4(c) is a diagram showing an example of a time change in the element characteristic when the power supply voltage of the IGBT at the time of turn-off changes. Vcc is a DC power supply voltage value. As Vcc increases, the characteristics of Ic, Vge, and Ig change from a solid line to a chain line. At this time, the tm period increases from tm5 to tm6.

Fig. 5(a) is a diagram showing an example of a Vge turn-off time td1000 obtained by extracting Vge of Fig. 4(a). The turn-off time td1000 needs to be the time having the mirror period tm.

Fig. 5(b) is a diagram showing an example of an Ig turn-off time td1001 obtained by extracting Ig of Fig. 4(a). The turn-off time td1001 is the time having the mirror period tm.

As the turn-off time td in the present embodiment, an example using the turn-off time td1001 of the gate current will be described, but the turn-off time td1000 of the gate voltage may be used.

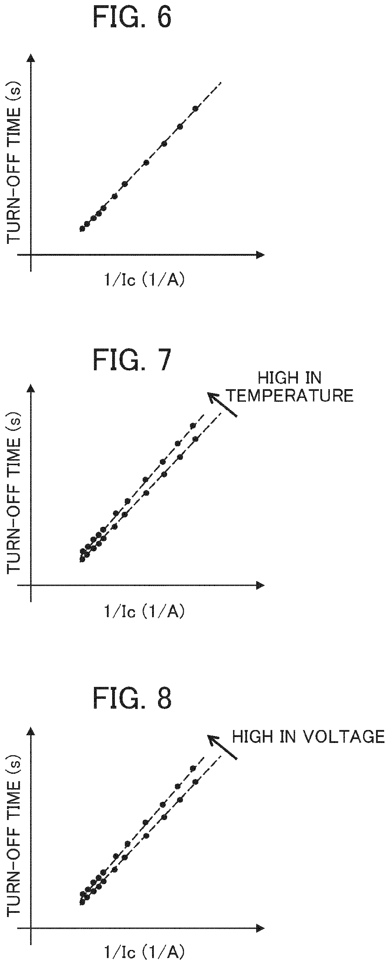

The reason why the conduction current values of the IGBTs 28 and 30 can be calculated from the turn-off time based on the map using Fig. 3 as one example will be described using Figs. 6 to 8.

Fig. 6 is a diagram showing the relationship between a constant DC power supply voltage value, a turn-off time td1001 at a constant temperature, and a collector current Ic. As shown in Fig. 6, the turn-off time is proportional to the reciprocal of Ic. This is because the mirror period tm is represented by tm = (εs × po × Vcs)/(Wn (Nd + psc) Jcon). εs is a dielectric constant, p0 is a hole concentration at the interface between a p layer of a collector region of the IGBT/conductivity modulation region, Vcs is the power supply voltage, Wn is a drift layer width of the IGBT, Nd is a donor density of a drift layer, psc is a hole density of a space charge region, and Jcon is a current density of Ic at the time of conduction.

Fig. 7 is a diagram showing an example of the difference between the turn-off time of the gate current and the collector current at the time of turn-off of the IGBT used to obtain the map of Fig. 3 depending on the temperature. It can be seen that the higher the temperature, the longer the turn-off time even if the current value of Ic in the steady state is the same. This is because tm changes as the temperature changes.

Fig. 8 is a diagram showing an example of the difference between the turn-off time of the gate current and the DC power supply voltage value at the time of turn-off of the IGBT used to obtain the map of Fig. 3. It can be seen that when the power supply voltage value becomes large, the turn-off time becomes long even if the current value of Ic in the steady state is the same. This is because tm changes depending on the difference in the DC power supply voltage value.

From Figs. 7 and 8, it is necessary to consider the influence of the DC power supply voltage value and temperature on the turn-off time and the collector current value. Therefore, it is necessary to provide the terms of the turn-off time, the collector current value (conduction current value), the DC power supply voltage value, and the temperature in the map for determining the unique conduction current value from the turn-off time.

The current value calculation map 39 created in view of such points can calculate the conduction current values of the IGBTs 28 and 30 by referring to the terms of the turn-off time, the DC power supply voltage value, and the temperature.

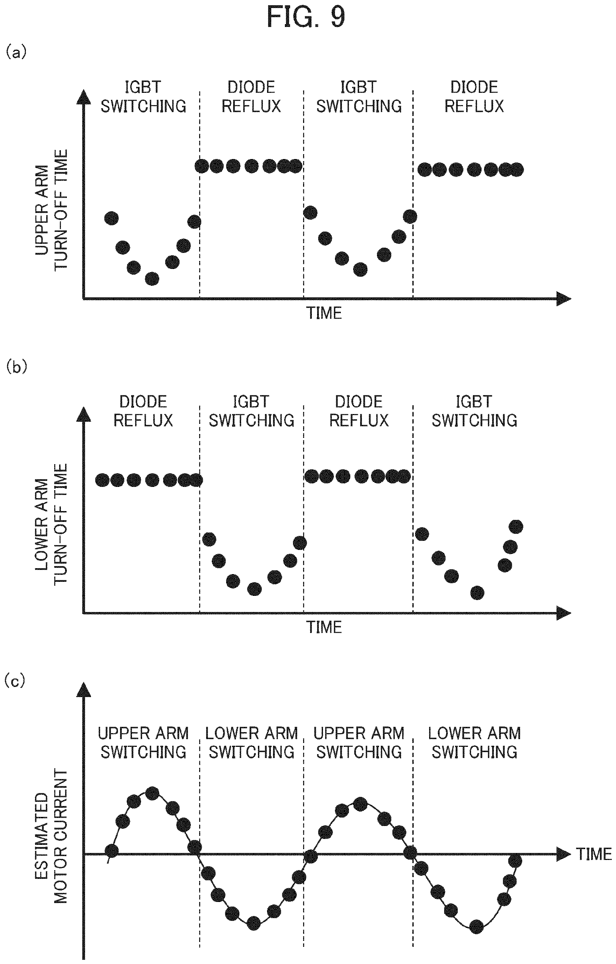

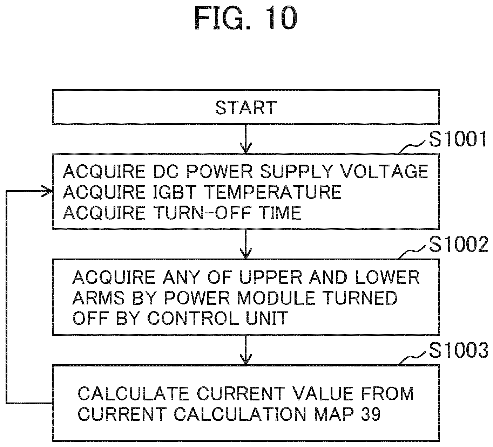

A method of calculating a one-phase current value (any of iu, iv, and iw) based on the current value calculation map 39 stored in the current calculation unit 50 will be described using Figs. 9 and 10. Fig. 9(a) is a diagram showing the relationship between an operating time and a turn-off time of the IGBT 28 being the upper arm. Fig. 9(b) is a diagram showing the relationship between an operating time and a turn-off time of the IGBT 30 being the lower arm.

As described above, the conduction current values of the IGBTs 28 and 30 at the time of switching can be calculated based on the current value calculation map 39 stored in the current calculation unit 50. Further, in the present embodiment, the load current value has a relation in which its positive value becomes equal to the conduction current value of the upper arm IGBT 28, and its negative value becomes equal to the conduction current value of the lower arm IGBT 30.

That is, information on which of the upper and lower IGBTs is operating is acquired from the control unit (motor control unit 18), and the conduction current value is calculated using the current value calculation map 39 stored in the current calculation unit 50, so that the load current can be measured. The result of calculating the load current based on this relationship is shown in Fig. 9(c).

Fig. 9(c) is a diagram showing with a solid line, an estimated motor current plotted by converting the turn-off time during switching in Figs. 9(a) and 9(b) into a conduction current value using the current value calculation map 39 stored in the current calculation unit 50, and in consideration of the positive/negative relationship between the upper and lower arms and the load current value, and values acquired from the current sensor installed in the inductive load. The current sensor installed in the inductive load (motor 16) is for verifying the accuracy of the current measurement method of the present embodiment, and is not illustrated in Figs. 1 and 2.

As shown in Fig. 9(c), it can be seen that the current measurement method in the present embodiment is capable of measuring the inductive load current.

Fig. 10 is a flowchart for measuring the load current created in view of these relationships.

First, as Step S1001, a DC power supply voltage is acquired by the voltage sensor 52, an IGBT temperature is acquired by the temperature sensor 20, and an IGBT turn-off time is acquired (calculated) by the turn-off time measuring unit 48.

Incidentally, by acquiring information on both the DC power supply voltage and the IGBT temperature, it is possible to measure a load current higher in accuracy. However, if the required accuracy is sufficiently satisfied, information about either one of the DC power supply voltage and the IGBT temperature may be acquired.

Next, in Step S1002, the power module (IGBT) which is turned OFF by the motor control unit 18 acquires and stores either the upper or lower arm. Incidentally, Step S1002 may be executed before Step S1001.

Next, in Step S1003, the absolute value of the current value is determined from the current value calculation map 39, based on the turn-off time, the DC power supply voltage value, and the temperature of the IGBT acquired in Step S1001. The positive or negative of the current value is determined based on whether the power module (IGBT) which is turned OFF is either the upper or lower arm.

The current value for one phase can be calculated from this flowchart (current measurement method). By carrying out the flow from Step S1001 to Step S1003 in three phases, all the load current values of the three phases can be measured.

As described above, the current measurement unit of the present embodiment is a current measuring instrument that measures the load current supplied from the power conversion device 10 to the load (motor 16), and includes the power module (inverter 14) which controls the energization of the power conversion device 10, the control unit (motor control unit 18) which controls the power module (inverter 14), the turn-off time measuring unit 48 which measures the turn-off time of the power module (inverter 14), the information measurement unit (temperature sensor 20, voltage sensor 52) which measures at least either one of the temperature information of the power module (inverter 14) and the DC power supply voltage 12 input to the power module (inverter 14) and outputs the measurement result, and the current calculation unit 50 which calculates the load current, based on the output of the turn-off time measuring unit 48 and the output of the information measurement unit (temperature sensor 20, voltage sensor 52).

Further, the current calculation unit 50 has the preset current value calculation map 39, and calculates the load current, based on the output of the turn-off time measuring unit 48, the output of the information measurement unit (temperature sensor 20, voltage sensor 52), and the current value calculation map 39.

According to the present embodiment, it is possible to realize a current measurement unit that measures a load current, which combines small size and energy saving without installing a current sensor between an inverter and a motor or inside the inverter. Further, by using the present current measurement unit, it is possible to realize a motor drive system which combines compact and energy saving without installing a current sensor between the inverter and the motor or inside the inverter.

### [Second Embodiment]

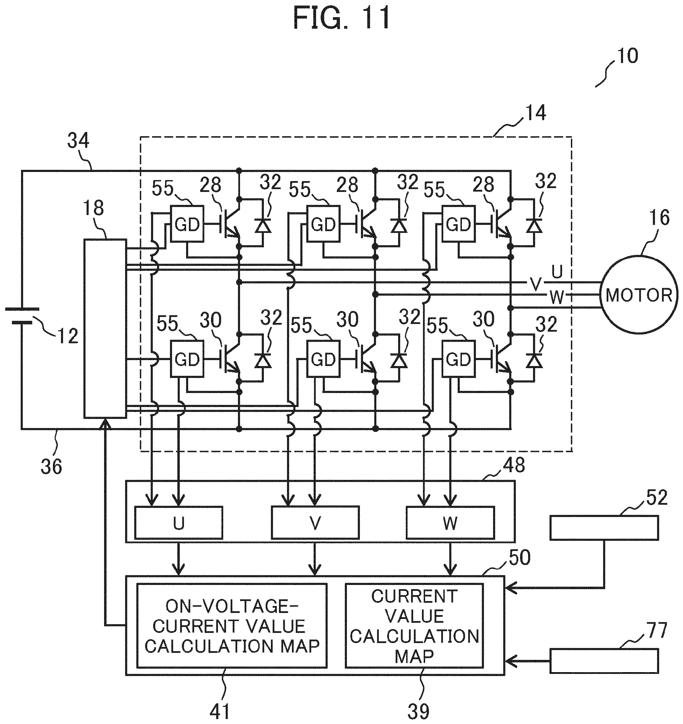

Description will be made as to a current measurement unit, a current measurement method, and a power conversion device according to a second embodiment of the present invention with reference to Figs. 11 to 14. Fig. 11 is a diagram showing the power conversion device of the present embodiment. The power conversion device 10 of the present embodiment is a power conversion device using a three-phase inverter as an example in a manner similar to the first embodiment. Hereinafter, the points of difference from the first embodiment will be described.

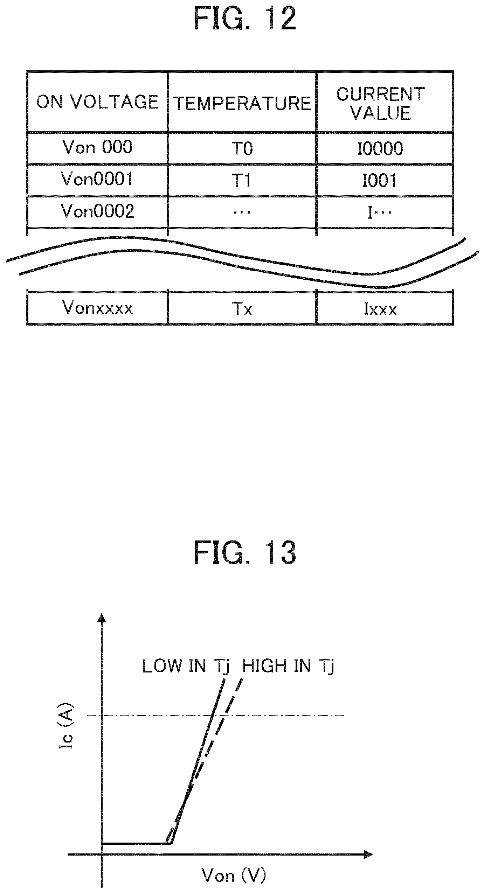

As shown in Fig. 11, as compared with Fig. 2 of the first embodiment, there are provided an on-voltage measurement sensor 77 instead of the temperature sensor 20 and an on-voltage-current value calculation map 41 using Fig. 12 as an example, which is included in the current calculation unit 50. The on-voltage measurement sensor 77 is a sensor which measures an on-voltage value Von being a collector-emitter voltage value Vce when a conduction current of each of IGBTs 28 and 30 is flowing. Von is a value when the charge in the IGBT is discharged to the minimum value Vce required for Vce to be an ON state.

Fig. 12 is a diagram showing an example of the on-voltage-current value calculation map 41 stored in the current calculation unit 50 of Fig. 11. The map of Fig. 12 stores information about the on-voltage Von which is Vce at the time of conduction of the IGBTs 28 and 30, the temperature of each of the IGBTs 28 and 30, and the current value at the time of conduction of the IGBTs 28 and 30.

The temperature of each of the IGBTs 28 and 30 is not limited to the temperature of the main body of each of the IGBTs 28 and 30, but as in the case of a junction temperature of each power module mounted with the IGBT, a case temperature, the average value of the temperatures of the power modules installed inside the inverter, and the temperature of a heat sink with the power module installed therein, anything that reflects the temperature information of the IGBT may be used. When creating the on-voltage-current value calculation map 41, it is desirable that the temperature is a temperature reflecting the characteristics of the IGBT, which is the same as the temperature of the current value calculation map 39.

A method of creating the on-voltage-current value calculation map 41 of Fig. 12 will be described using Fig. 13. Fig. 13 is a diagram showing the temperature dependence of the on-voltage Von of the IGBT and its conduction current (collector current) Ic. The IGBT is driven in a linear region shown in Fig. 13, and in this linear region, the on-voltage value has a relationship of changing depending on the collector current value and the temperature.

As shown in Fig. 13, in the region where the on-voltage Von becomes a constant value or more, the on-voltage Von changes in proportion to the collector current Ic. Further, when the junction temperature Tj inside the power module increases, the on-voltage Von also increases. It is therefore necessary to provide the terms of the on-voltage value, the temperature, and the collector current value (conduction current value) in the on-voltage-current value calculation map 41.

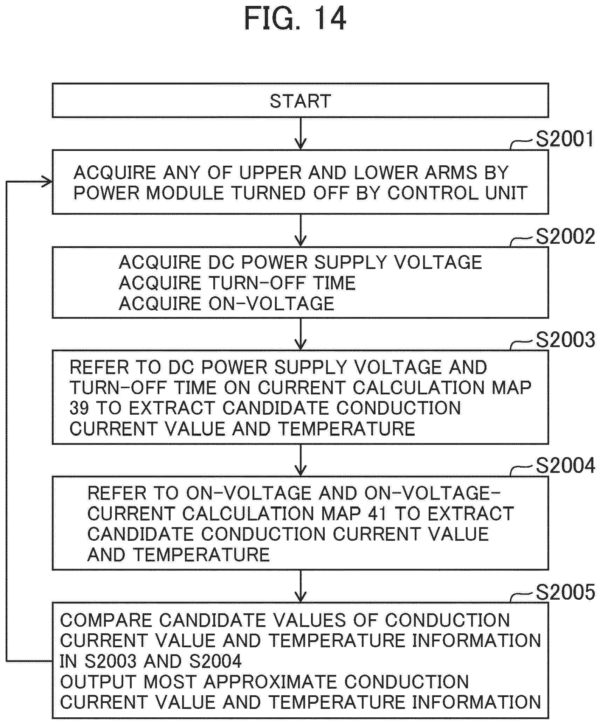

A method for calculating a one-phase current value (any of iu, iv, and iw) based on the current value calculation map 39 and the on-voltage-current value calculation map 41 stored in the current calculation unit 50 will be described using Fig. 14.

As described in the first embodiment, the turn-off time has the characteristic that changes depending on the power supply voltage value, the conduction current value, and the temperature. Since the power supply voltage value is acquired by the voltage sensor 52, the turn-off time is determined by defining the conduction current value and the temperature as variables. As can be seen from the on-voltage-current value calculation map 41 of Fig. 12, the on-voltage is determined by defining the conduction current value and the temperature as variables.

That is, both the turn-off time and the on-voltage can be represented by two variables of the conduction current value and the temperature. Accordingly, when the turn-off time and the on-voltage take the same conduction current value and temperature, their values can be uniquely determined. With this, the conduction current value of each of the IGBTs 28 and 30 can be measured. At this time, the temperature of the IGBT can be measured at the same time.

Fig. 14 is a flowchart for measuring the load current value and the temperatures of the IGBTs 28 and 30. First, in Step S2001, the power module (IGBT) that is turned OFF by the motor control unit 18 stores (acquires) either the upper or lower arm.

Next, in Step S2002, the DC power supply voltage is acquired by the voltage sensor 52, the turn-off time of the IGBT is acquired (calculated) by the turn-off time measuring unit 48, and the on-voltage is acquired by the on-voltage measurement sensor 77.

In Step S2003, the conduction current value and temperature to be defined as candidates are output by referring to the IGBT turn-off time acquired in Step S2002, the DC power supply voltage value of the inverter, the on-voltage value of the IGBT, and the current (value) calculation map 39 stored in the current calculation unit 50.

Subsequently, in Step S2004, the conduction current value and temperature to be defined as candidates are extracted (output) by referring to the on-voltage value and the on-voltage-current (value) calculation map 41.

Finally, in step S2005, the conduction current values and temperatures (information) output in Step S2003 and Step S2004 are compared, and the most approximate conduction current value and temperature are output. The load current value is determined from the output conduction current value and the driving state of each of the upper and lower arms (whether the power module (IGBT) that turns OFF is either the upper or lower arm). From this flowchart, the load current value of one phase and the temperature of the switching element can be calculated. By executing the flow of Steps S2001 to S2005 in all three phases, the load current values of the three phases and the temperature of the switching IGBT can be measured.

As described above, in the current measurement unit of the present embodiment, the information measurement unit (on-voltage measurement sensor 77) measures the on-voltage of the power module (each of IGBTs 28 and 30 of the inverter 14).

Further, the current calculation unit 50 has a preset on-voltage-current value calculation map 41, and calculates the load current on the basis of the output of the turn-off time measuring unit 48, the output of the information measurement unit (on-voltage measurement sensor 77), and the on-voltage-current value calculation map 41.

According to the present embodiment, it is possible to realize a current measurement unit that measures a load current, which combines both compact and energy saving without installing a current sensor between an inverter and a motor or inside the inverter. Also, it is possible to measure the temperature of a power module inside the inverter without installing a temperature sensor inside the inverter. Further, by using the present current measurement unit, it is possible to realize a motor drive system that combines both compact and energy-saving without installing a current sensor between the inverter and the motor or inside the inverter.

### [Third Embodiment]

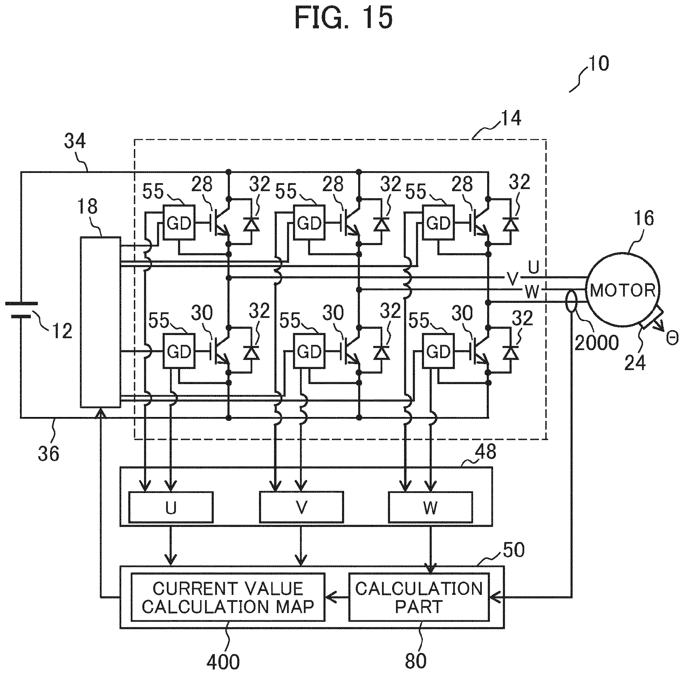

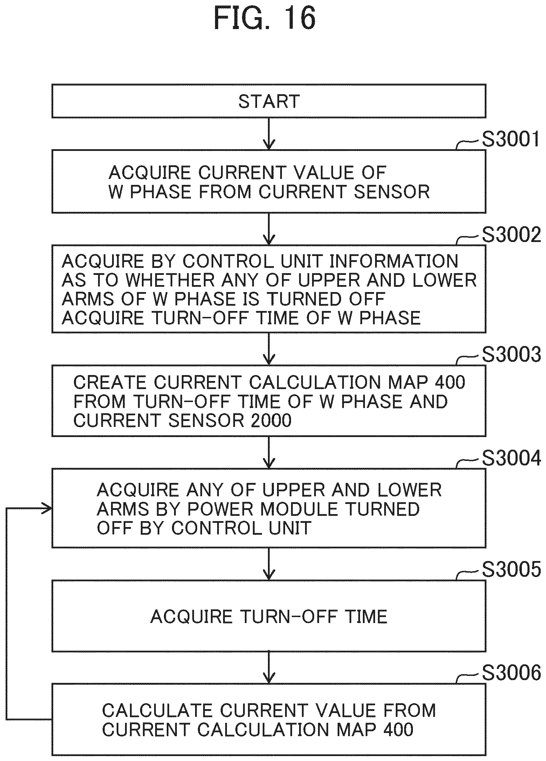

Description will be made as to a current measurement unit, a current measurement method, and a power conversion device according to a third embodiment of the present invention with reference to Figs. 15 and 16. Fig. 15 is a diagram showing the power conversion device of the present embodiment. The power conversion device 10 of the present embodiment is a power conversion device using a three-phase inverter as an example in a manner similar to the first embodiment. Hereinafter, the points of difference from the first embodiment will be described.

As shown in Fig. 15, as compared with Fig. 2 of the first embodiment, a current sensor 2000 is provided in a W phase between an inverter and a motor, and a calculation part 80 is provided in a current calculation unit 50. The calculation part 80 sequentially creates a current value calculation map 400 having a correspondence between a conduction current value of each of IGBTs 28 and 30 and a turn-off time thereof, based on the results of the current sensor 2000 and a W-phase turn-off time measuring unit 48. The current sensor 2000 may be installed in at least any one of the U phase, V phase, and W phase. The calculation part 80 may take the form of sequentially creating the current value calculation map 400, based on the result with the turn-off time measuring unit 48 of the same phase in which the current sensor 2000 is installed.

A method of calculating the current value (iu, iv, iw) of each phase based on the current value calculation map 400 stored in the current calculation unit 50 will be described using Fig. 16.

Fig. 16 is a flowchart for calculating the load current value in the present embodiment.

First, as Step S3001, a W phase current value is acquired from the current sensor 2000, and the current value and its acquisition time are stored in the calculation part 80. The W phase current value is determined by S3001.

Next, in Step S3002, the turn-off time of the IGBT and the time at which the turn-off time is acquired are stored in the calculation part 80. (Information on which arm above or below the W phase turns OFF and the turn-off time of the W phase are acquired from the motor control unit 18). Next, in Step S3003, the current value calculation map 400 which stores the relationship between the current value acquired at the same time and the turn-off time stored in Steps S3001 and S3002 is created. Although not shown in particular, the current value calculation map 400 uses as an example, one in which the item of the voltage value and the term of the temperature in Fig. 3 are excluded. The current value acquired by the current sensor 2000, that is, the conduction current value of the IGBT is output in consideration of the information about the DC power supply voltage value of the inverter and the temperature. Therefore, the turn-off time of the IGBT and the conduction current value can be determined in a one-to-one correspondence relation.

Next, in Step S3004, the U-phase IGBT that turns OFF stores either the upper or lower arm. (The power module (IGBT) that turns OFF by the motor control unit 18 acquires either the upper or lower arm.).

Next, in Step S3005, the turn-off time of the IGBT is calculated (acquired).

Next, in Step S3006, the current value is output from the turn-off time acquired in Step S3005 based on the current value calculation map 400. At this time, the positive/negative of the load current value can be obtained from either the upper or lower information of the switching arm. Steps S3004 to S3006 are similarly performed in the V phase to determine the load current values of the three phases. The order of outputting the U phase and the V phase may be reversed.

As described above, in the current measurement unit of the present embodiment, the information measurement unit (current sensor 2000) measures the current value between the power conversion device 10 and the load (motor 16).

Incidentally, in the present embodiment, the information measurement unit shows an embodiment in which neither the temperature information of the power module (inverter 14) nor the DC power supply voltage 12 input to the power module (inverter 14) is included. However, as in the first and second embodiments, the temperature sensor 20, the voltage sensor 52, and the on-voltage measurement sensor 77 are provided, and the current calculation unit 50 may be configured to calculate the load current, based on the information from each of these sensors.

According to the present embodiment, one current sensor is installed between the inverter and the motor without installing the current sensor inside the inverter, whereby it is possible to realize a current measurement unit that measures the load current, which combines compact and energy saving. Further, one current sensor is installed between the inverter and the motor without installing the current sensor inside the inverter, whereby it is possible to realize a motor drive system having both compact and energy saving.

### [Fourth Embodiment]

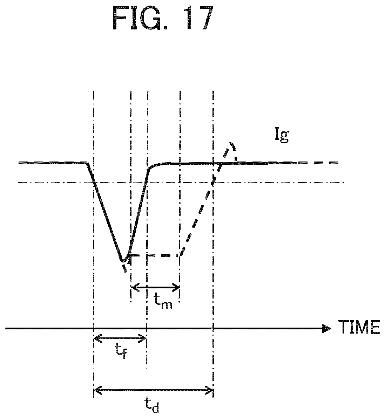

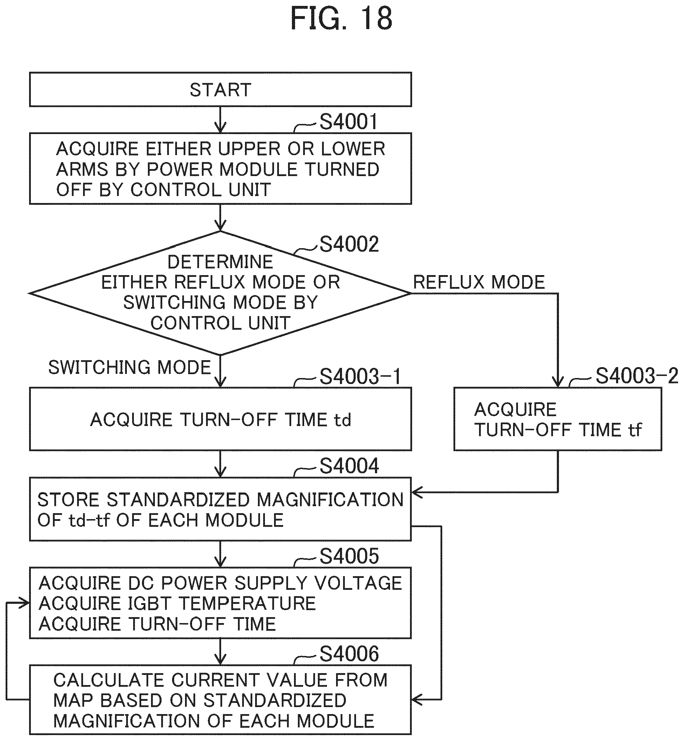

Description will be made as to a current measurement unit, a current measurement method, and a power conversion device according to a fourth embodiment of the present invention with reference to Figs. 17 and 18.

In each of the above first to three embodiments, the description has been made on the premise that the characteristics of the power modules of the three-phase upper and lower arms constituting the power conversion device are uniform, but in the present embodiment, description will be made as to a method capable of measuring the current with high accuracy even when the characteristics between the power modules of the three-phase upper and lower arms are non-uniform. As an example thereof, description will be made about the case where the value of a gate resistance provided for adjusting a gate current when driving the gate of the power module (IGBT) varies.

According to the present embodiment, it is possible to reduce a current value error due to variation in the element characteristics of the IGBT. A method of reducing the current value error due to the element variation will be described using Figs. 17 and 18.

Fig. 17 is a diagram showing the relationship of the gate current at the turn-off of the IGBT in a reflux mode and a switching mode. A solid line is Ig4000 in the reflux mode, and a chain line is Ig4001 in the switching mode. Since in the reflux mode, the current is energized in the reflux diode 32 and not energized in the IGBTs 28 and 30, the turn-off time is determined only by the input capacitance of the IGBT and the gate resistance. Incidentally, tm in Fig. 17 is the above-mentioned "mirror period", tf indicates the turn-off time of the reflux mode, and td indicates the turn-off time of the switching mode, respectively.

Since the input capacitance and the gate resistance are low in temperature dependence, the variation in the turn-off time in the reflux mode is the variation in the RC time constant consisting of the product of the input capacitance and the gate resistance. Therefore, it is possible to correct the variation in the RC time constant between the power modules (IGBTs 28, 30), based on the turn-off time in the reflux mode.

Fig. 18 is a flowchart for calculating the load current value in the present embodiment.

First, in Step S4001, the IGBT turned OFF by the motor control unit 18 stores the IGBT being either the upper or lower arm.

Next, in Step S4002, the motor control unit 18 determines that the timing for measuring the turn-off time is the "switching mode" or the "reflux mode".

When it is determined that the timing is the "reflux mode", the flowchart proceeds to Step S4003-2. In Step S4003-2, the turn-off time tf in the reflux mode is stored (acquired).

On the other hand, when it is determined in Step S4002 that the timing is the "switching mode", the flowchart proceeds to Step S4003-1. At the time of turn-off of the switching mode, the turn-off time td is stored (acquired) in step S4003-1.

Next, in Step S4004, the difference in td-tf during the same operation is taken, and standardization is performed on the basis of td-tf, which takes the smallest value. At this time, the magnification used for standardization is stored.

Here, the term "at the same operation" refers to the time when the six IGBTs 28 and 30 on the three-phase upper and lower arms perform the same operation. That is, it is "when the six IGBTs 28 and 30 operate in response to the same command signal at the same DC power supply value and the same temperature".

Step S4005 and its subsequent Steps are a flow to calculate the current value in a manner similar to the first to third embodiments. Fig. 18 shows the current calculation method of the first embodiment as an example. However, in Step S4006, the reference value of the turn-off time of the current value calculation map is referred to by the value multiplied by the standardized magnification stored in Step S4004.

Specifically, for example, among the three IGBTs_A, B, and C, the IGBT_A that has the shortest turn-off time is set to "1", and stores how many times (XX times) the turn-off time of the IGBT_B at the above-mentioned "same operation" will be. Upon referring to the map, the IGBT_B refers to the turn-off time as a value multiplied by the reciprocal of the obtained multiple (XX times).

By carrying out Step S4005 and Step S4006 of the present flow in each phase, it is possible to measure the current with high accuracy even when the characteristics between the power modules of the three-phase upper and lower arms are ununiform.

As described above, in the current detector of the present embodiment, the turn-off time measuring unit 48 corrects the variation in the turn-off delay time due to the element variation, based on the turn-off delay time during the reflux period of the power module (inverter 14). As a result, it becomes possible to correct the load current value and measure the load current high in accuracy.

According to the present embodiment, it is possible to realize the current measurement unit measuring the load current, having both compact and energy saving without installing the current sensor between the inverter and the motor or inside the inverter, even if the feedback capacity of each power module varies. Further, by using the present current measurement unit, it is possible to realize the motor drive system that combines compact and energy-saving without installing the current sensor between the inverter and the motor or inside the inverter.

Incidentally, the present invention is not limited to the above-mentioned embodiments and includes various modifications. For example, the above-described embodiments have been described in detail in order to explain the present invention in an easy-to-understand manner, and are not necessarily limited to those having all the described configurations. Also, it is possible to replace a part of the configuration of one embodiment with the configuration of another embodiment. Further, it is also possible to add the configuration of another embodiment to the configuration of one embodiment. In addition, it is possible to apply addition/deletion/replacement of another configuration with respect to a part of the configuration of each embodiment.

### List of Reference Signs

10...power conversion device, 12...DC power supply device (DC power supply voltage), 14 ...inverter, 16 ...motor, 18 ...motor control unit, 20 ...temperature sensor, 24 ...motor position sensor (rotation angle sensor), 28 ...(upper arm) IGBT, 30 ...(lower arm) IGBT, 32 ...reflux diode, 34 ...positive electrode side line, 36 ...negative electrode side line, 38...torque command (calculation part), 39 ...current value calculation map, 40 ...current command (calculation part), 41 ...on-voltage-current value calculation map, 42 ...current command/3-phase voltage conversion (part), 44 ...PWM conversion (part), 46 ...feedback conversion (part), 48 ...turn-off time measuring unit (IGBT turn-off delay time calculation unit), 50 ...(phase) current calculation unit, 52 ...voltage sensor (DC power supply voltage value measuring unit), 55 ... gate driver, 77 ...on-voltage measurement sensor, 80 ...calculation part, 400 ...current value calculation map, 1000, 1001 ...turn-off time, 2000 ...current sensor, 4000, 4001 ...gate current.

## Claims

1. A current measurement unit which measures a load current supplied from a power conversion device to a load, comprising:
a power module which controls energization of the power conversion device;
a control unit which controls the power module;
a turn-off time measuring unit which measures a turn-off time of the power module;
an information measurement unit which measures at least either of temperature information of the power module and a DC power supply voltage input to the power module and outputs a result of the measurement; and
a current calculation unit which calculates the load current, based on the output of the turn-off time measuring unit and the output of the information measurement unit.

2. The current measurement unit according to claim 1,
wherein the current calculation unit has a preset current value calculation map indicating a correspondence relationship between the turn-off time of the power module, both or either of the temperature information of the power module and the DC power supply voltage input to the power module, and the load current, and
wherein the current calculation unit calculates the load current, based on the output of the turn-off time measuring unit, the output of the information measurement unit, and the current value calculation map.

3. The current measurement unit according to claim 1, wherein the power module to be turned OFF acquires either an upper or lower arm from the control unit, and the current calculation unit determines the positive or negative of the load current, based on the acquired result.

4. The current measurement unit according to claim 1, wherein the information measurement unit measures an on-voltage of the power module.

5. The current measurement unit according to claim 4,
wherein the current calculation unit has a preset on-voltage-current value calculation map indicating a correspondence relationship between the on-voltage of the power module, the temperature information of the power module, and the load current, and
wherein the current calculation unit calculates the load current, based on the output of the turn-off time measuring unit, the on-voltage measured by the information measurement unit, and the on-voltage-current value calculation map.

6. The current measurement unit according to claim 4, wherein the power module to be turned OFF acquires either an upper or lower arm from the control unit, and the current calculation unit determines the positive or negative of the load current, based on the acquired result.

7. The current measurement unit according to claim 2,
wherein the load is a three-phase AC motor,
wherein the information measurement unit has a current sensor which measures a conduction current value of at least any one of three-phase feeding lines between the power module and the three-phase AC motor, and
wherein the current calculation unit has a calculation part which sequentially creates the current value calculation map, based on the conduction current value measured by the current sensor and the turn-off time measured by the turn-off time measuring unit.

8. The current measurement unit according to claim 7,
wherein the current value calculation map includes a correspondence relationship between the conduction current value measured by the current sensor and the load current, and
wherein the current calculation unit calculates the load current, based on the conduction current value measured by the current sensor, the output of the turn-off time measuring unit, and the current value calculation map.

9. The current measurement unit according to claim 1, wherein the turn-off time measuring unit corrects variation in a turn-off delay time due to element variation, based on a turn-off delay time during a reflux period of the power module.

10. A power conversion device having a current measurement unit according to any one of claims 1 to 9, wherein the load is a motor driven by the power conversion device.
